# EUROPÄISCHE PATENTSCHRIFT

(11) **EP 3 918 212 B1**
(45) Veröffentlichungstag und Bekanntmachung des Hinweises auf die Patenterteilung: **23.11.2022**
(21) Anmeldenummer: 20701543.9
(22) Anmeldetag: 15.01.2020
(51) Int. Cl.: F16B 7/00

(54) **VERBINDER, VERBINDUNGSANORDNUNG UND VERFAHREN ZUM VERBINDEN ZWEIER GEWINDESTANGEN IN EINEM VERSTELLBAREN WINKEL**
CONNECTOR, CONNECTING ARRANGEMENT AND METHOD FOR CONNECTING TWO THREADED RODS IN AN ADJUSTABLE ANGLE
CONNECTEUR, DISPOSITIF DE CONNEXION ET PROCÉDÉ POUR LA CONNEXION DE DEUX TIGES FILETÉES À UN ANGLE RÉGLABLE

(30) Priorität: 30.01.2019 DE 102019102346
(43) Veröffentlichungstag der Anmeldung: 08.12.2021
(73) Patentinhaber: fischerwerke GmbH & Co. KG, 72178 Waldachtal (DE)
(72) Erfinder: MAZZUCATO, Federico, 35020 Lengaro (PD) (IT); MARTINI, Michele, 30038 Spinea (VE) (IT)
(86) Internationale Anmeldenummer: PCT/EP2020/050847
(87) Internationale Veröffentlichungsnummer: WO 2020/156808

(56) Entgegenhaltungen:
- EP-A1- 0 408 492
- DE-A1- 3 224 986

## Beschreibung

Die Erfindung betrifft einen Verbinder zum Verbinden einer ersten Gewindestange mit einer zweiten Gewindestange mit den Merkmalen des Oberbegriffs des Anspruchs 1. Des Weiteren betrifft die Erfindung eine Verbindungsanordnung mit dem Verbinder mit den Merkmalen des Oberbegriffs des Anspruchs 9 und ein Verfahren zum Verbinden von zwei Gewindestangen mit den Merkmalen des Oberbegriffs des Anspruchs 10.

Es ist ein Verbinder zum Verbinden von zwei Gewindestangen bekannt, der einen Bügel in der Form eines U-Profils aufweist, in dessen halbzylinderschalenförmigem Joch eine erste Gewindestange anordenbar ist. Zwei zueinander parallele und tangential von dem Joch abstehende Schenkel des U-Profils sind mit fluchtenden, kreisförmigen Löchern versehen, durch die ein Zylinderbolzen gesteckt ist, der um seine Achse in den Löchern drehbar ist. Der Zylinderbolzen weist einen Kopf auf einer Außenseite des einen Schenkels und geprägte, an einem Umfang des Zylinderbolzens abstehende Sicken auf einer Außenseite des anderen Schenkels auf, so dass der Zylinderbolzen unverlierbar in den Löchern der Schenkel des Bügels des bekannten Verbinders gehalten ist. Der Zylinderbolzen verläuft tangential zu der im Joch des Verbinders angeordneten Gewindestange und hält sie in dem Joch. Zum Anordnen in dem Joch muss die Gewindestange axial zu sich und zum Joch in das Joch geschoben, beziehungsweise der Verbinder mit seinem Joch auf die Gewindestange geschoben werden. Der Zylinderbolzen weist ein radial durch seine Mantelfläche durchgehendes Gewindeloch zwischen den Schenkeln des Bügels des Verbinders auf, in das die zweite Gewindestange zum Verbinden mit dem Verbinder einschraubbar ist. Durch Drehen des Zylinderbolzens um seine Achse in den Löchern der Schenkel des Bügels des Verbinders ist eine axiale Richtung des durch den Zylinderbolzen radial durchgehenden Gewindelochs an eine axiale Richtung der zweiten Gewindestange anpassbar. Um den bekannten Verbinder axial zu der ersten, in seinem Joch angeordneten Gewindestange auf der ersten Gewindestange festzulegen, müssen auf beiden Seiten des Bügels des bekannten Verbinders Muttern auf die erste Gewindestange geschraubt oder andere Widerlager oder Anschläge unverschiebbar an der ersten Gewindestange angebracht werden.

Aufgabe der Erfindung ist, einen Verbinder der vorstehend erläuterten Art vorzuschlagen, der einfach auf einer Gewindestange anordenbar und axial auf der Gewindestange festgelegt ist.

Diese Aufgabe wird erfindungsgemäß durch die Merkmale des Ansprüche 1, 9 und 10 gelöst. Der erfindungsgemäße Verbinder weist einen Bügel auf, insbesondere einen U-förmigen Bügel beziehungsweise einen Bügel mit einem U-Profil. Er ist zum Verbinden einer ersten Gewindestange mit einer zweiten Gewindestange vorgesehen, in einem an sich beliebigen Winkel der beiden Gewindestangen zueinander. Der Bügel des erfindungsgemäßen Verbinders weist zwei Schenkel auf, die durch ein Joch verbunden sind. Das Joch kann beispielsweise eckig sein, vorzugsweise ist es gerundet, insbesondere halbrund beziehungsweise halbzylindrisch. Vorzugsweise weist der erfindungsgemäße Verbinder ein halbzylinderschalenförmiges Joch auf. Die Weite des Jochs korrespondiert zu dem Durchmesser der ersten Gewindestange, so dass diese innen am Joch flächig anliegt. Von dem Joch stehen die beiden Schenkel vorzugsweise tangential und parallel zueinander ab. Möglich ist beispielsweise auch, dass sich ein Abstand der beiden Schenkel voneinander vom Joch weg vergrößert, verkleinert oder zuerst verkleinert und anschließend wieder vergrößert. Die Aufzählung ist beispielhaft und nicht abschließend. Weisen die beiden Schenkel an einer von dem Joch beabstandeten Stelle einen kleineren Abstand voneinander auf als am Joch, lässt sich die Gewindestange zwischen die beiden Schenkel in das Joch des Bügels des erfindungsgemäßen Verbinders einschnappen. Jedenfalls ist der Bügel des erfindungsgemäßen Verbinders so gestaltet, dass die Gewindestange nicht nur in ihrer axialen Richtung und in axialer Richtung des Jochs in das Joch geschoben werden kann, sondern auch von einer dem Joch fernen Stelle der Schenkel zwischen die beiden Schenkel in das Joch des Bügels des Verbinders eingebracht werden kann, so dass das Joch die Gewindestange auf einem Teil ihres Umfangs umgreift.

Des Weiteren weist der erfindungsgemäße Verbinder eine Befestigungseinrichtung auf, mit der die zweite Gewindestange in einem einstellbaren beziehungsweise verstellbaren Winkel zu der in dem Joch des Bügels angeordneten ersten Gewindestange mit dem Bügel des Verbinders und damit mit der ersten Gewindestange verbindbar ist. Insbesondere ist der Winkel, in dem der Verbinder die erste Gewindestange und die zweite Gewindestange verbindet, selbsteinstellend beziehungsweise passt sich an einen Winkel, in dem die beiden Gewindestangen zueinander angeordnet sind, an oder ist an den Winkel zwischen den beiden Gewindestangen anpassbar. Der verstellbare Winkel bezieht sich dabei auf die Längsachsen der Gewindestangen.

Der erfindungsgemäße Verbinder weist ein Gewindeeingriffelement in seinem Joch auf, das derart zwischen zwei Gewindegänge der in dem Joch angeordneten ersten Gewindestange greift, dass der Bügel des Verbinders axial zu der ersten Gewindestange auf der ersten Gewindestange festgelegt ist.

Ein Vorteil der Erfindung ist, dass der Bügel des Verbinders zur Montage nicht von einem Ende auf die erste Gewindestange geschoben beziehungsweise umgekehrt die erste Gewindestange nicht mit einem Ende zwischen die beiden Schenkel und in das Joch gesteckt werden muss, was grundsätzlich aber auch möglich ist, sondern auch von einer dem Joch fernen Stelle zwischen die beiden Schenkel und in das Joch des Bügels des Verbinders eingebracht werden kann. Es können deswegen auf beiden Seiten des Verbinders bereits Bauteile an der ersten Gewindestange befestigt sein, wenn der Bügel des Verbinders an der ersten Gewindestange angeordnet und befestigt wird. Der Verbinder kann somit nachträglich an der bereits montierten ersten Gewindestange befestigt werden, ohne dass die Gewindestange gelöst oder Bauteile von ihr gelöst werden müssen.

Ein weiterer Vorteil der Erfindung ist, dass der Bügel des Verbinders von selbst durch den Gewindeeingriff des Gewindeeingriffelements in seinem Joch axial auf der in seinem Joch angeordneten ersten Gewindestange festgelegt ist. Es müssen deswegen keine Muttern beiderseits des Bügels des Verbinders auf die erste Gewindestange geschraubt oder andere Widerlager, Anschläge oder dergleichen an der ersten Gewindestange angeordnet werden, um den erfindungsgemäßen Verbinder axial an der ersten Gewindestange festzulegen.

Die erste Gewindestange und die zweite Gewindestange sind vorzugsweise keine Bestandteile des erfindungsgemäßen Verbinders, können allerdings bei Ausführungen der Erfindung einzeln oder gemeinsam mit dem Verbinder eine Verbindungsanordnung bilden.

Der erfindungsgemäße Verbinder kann beispielsweise eine an einer Innenseite des Jochs seines Bügels überstehende Nase, Sicke, Rippe, Zapfen oder dergleichen als Gewindeeingriffelement aufweisen. Der Bügel kann auch mehrere Gewindeeingriffelemente aufweisen. Eine bevorzugte Ausgestaltung der Erfindung sieht ein Teilinnengewinde als Gewindeeingriffelement an einer Innenseite des Jochs vor. Das Teilinnengewinde bildet ein Gegengewinde, das in ein Gewinde der in dem Joch des Bügels angeordneten ersten Gewindestange greift und dadurch den Bügel axial zu der ersten Gewindestange auf der ersten Gewindestange festlegt. Das Teilinnengewinde erstreckt sich über einen Innenumfang oder einen Teil des Innenumfangs des Jochs des Bügels.

In bevorzugter Ausgestaltung der Erfindung weist der Bügel des Verbinders ein U-Profil mit einem halbzylinderschalenförmigen Joch mit einem Halbinnengewinde an seiner Innenseite als Gewindeeingriffelement für den Eingriff in das Gewinde der in dem Joch angeordneten ersten Gewindestange und zwei tangential von dem Joch abstehende, zueinander parallele, plattenförmige Schenkel auf. Das Halbinnengewinde ist ein Innengewinde, das sich in einer Umfangsrichtung über 180° erstreckt.

Eine Ausgestaltung der Erfindung sieht vor, dass der Bügel des Verbinders zwei miteinander fluchtende Löcher in seinen Schenkeln zum Durchstecken eines Riegels, beispielsweise eines Bolzens, aufweist. Der durch die Löcher der Schenkel gesteckte Riegel schließt das Joch zu einem normalerweise nicht kreisförmigen Ring. "Fluchtend" bedeutet hier eine Anordnung der Löcher so, dass der Riegel durchsteckbar ist. Strenggenommen bedeutet "fluchtend" gleichachsig in den beiden Schenkeln des Bügels des Verbinders angeordnete Löcher; hier sollen weitergehend unter "fluchtend" auch radial versetzte Löcher verstanden werden, sofern der Riegel durch die Löcher steckbar ist. Die Löcher sind in den Schenkeln des Bügels des erfindungsgemäßen Verbinders so zu dem Joch des Bügels angeordnet, dass der durch die Löcher gesteckte Riegel die in dem Joch angeordnete erste Gewindestange in dem Joch und das Gewindeeingriffelement in dem Joch des Bügels in Eingriff mit dem Gewinde der ersten Gewindestange hält, so dass der Bügel des Verbinders axial und radial auf der ersten Gewindestange festgelegt ist. Der Bügel kann auf der ersten Gewindestange klemmen und dadurch drehfest auf der ersten Gewindestange sein. Der Bügel kann drehbar, das heißt schraubbar auf der ersten Gewindestange und dadurch in axialer Richtung auf der ersten Gewindestange verstellbar sein.

Vorzugsweise weist der Riegel ein Innengewindeloch zum Einschrauben der zweiten Gewindestange zum Verbinden mit dem Bügel des Verbinders und damit mit der im Joch des Bügels angeordneten ersten Gewindestange auf. Der durch die Löcher in den Schenkeln des Bügels des Verbinders steckbare beziehungsweise gesteckte Riegel bildet die Befestigungseinrichtung oder ist Teil der Befestigungseinrichtung zum Verbinden der zweiten Gewindestange mit dem Bügel des Verbinders und mit der im Joch des Bügels angeordneten ersten Gewindestange. Das Innengewindeloch im Riegel befindet sich vorzugsweise in einer zu den Schenkeln des Bügels parallelen und zum Joch radialen Ebene zwischen den beiden Schenkeln des Bügels des Verbinders. Allerdings sind auch andere Richtungen und/oder Ausrichtungen des Innengewindelochs im Riegel des Verbinders möglich.

Zu einer Winkelausrichtung beziehungsweise zu einer Anpassung an einen Winkel zwischen der ersten Gewindestange und der zweiten Gewindestange, die der Verbinder verbindet, ist der Riegel gemäß einer Weiterbildung der Erfindung in den Löchern in den Schenkeln des Bügels des Verbinders drehbar. Insbesondere ist der Riegel ein Zylinderbolzen und/oder die Löcher in den Schenkeln sind im Wesentlichen kreisrund.

Eine Weiterbildung der Erfindung sieht einen Vorsprung an einem Umfang des Riegels als Ausziehsicherung und eine Aussparung in einem Rand mindestens eines der beiden Löcher in den Schenkeln des Bügels vor. Zum Durchstecken durch die Löcher in den Schenkeln des Bügels wird der Riegel so gedreht, dass der Vorsprung an seinem Umfang in Deckung mit der Aussparung im Rand des oder der Löcher in einem oder beiden Schenkeln des Bügels ist. Nachdem beim Durchstecken des Riegels durch die Löcher in den Schenkeln des Bügels des Verbinders der Vorsprung am Umfang des Riegels durch die Aussparung im Rand der Löcher durchgetreten ist, kann der Riegel gedreht werden, so dass der Vorsprung nicht mehr mit der Aussparung fluchtet, wodurch der Riegel nicht mehr aus den Löchern in den Schenkeln des Bügels des Verbinders herausgezogen werden kann, ohne den Riegel vorher zu drehen.

Der Vorsprung kann so am Riegel angeordnet sein, dass er sich auf einer dem einen Schenkel abgewandten Außenseite des anderen Schenkels des Bügels befindet, wenn der Riegel durch die Löcher in beiden Schenkeln gesteckt ist.

Eine Weiterbildung der Erfindung sieht vor, dass die Aussparungen in den Rändern der Löcher in den beiden Schenkeln des Bügels des Verbinders in Umfangsrichtung zueinander versetzt sind, so dass der Riegel beim Durchstecken durch die Löcher in den beiden Schenkeln des Bügels gedreht werden muss, wenn der Vorsprung am Riegel durch die Aussparung im Rand des Lochs in dem einen Schenkel durchgetreten ist, bis der Vorsprung am Riegel mit der in Umfangsrichtung versetzten Aussparung im Rand des Lochs in dem anderen Schenkel fluchtet, damit der Vorsprung am Riegel mit der Aussparung im Rand des Lochs in dem anderen Schenkel fluchtet. Das verhindert ein Herausziehen des Riegels aus den Löchern beider Schenkel, ohne den Riegel zwischendurch so zu drehen, dass der Vorsprung an seinem Umfang in Deckung mit der Aussparung in dem Rand des Lochs in dem einen Schenkel des Bügels des erfindungsgemäßen Verbinders gebracht wird. Diese Ausführung der Erfindung dient als Verliersicherung für den Riegel.

Möglich ist auch eine Anordnung des Vorsprungs so am Riegel, dass er sich an einer Innenseite eines Schenkels des Bügels befindet, wenn der Riegel durch die Löcher in beiden Schenkeln gesteckt ist. In diesem Fall genügt eine Aussparung in dem Rand des Lochs in dem einen Schenkel des Bügels.

Der Riegel kann mehrere, gleichmäßig oder ungleichmäßig über seinen Umfang verteilt angeordnete Vorsprünge und das oder die Löcher in den Schenkeln des Bügels des Verbinders mit den Vorsprüngen deckungsgleiche Aussparungen in ihren Rändern aufweisen.

Die erfindungsgemäße Verbindungsanordnung mit den Merkmalen des Anspruchs 9 umfasst den Verbinder und die zwei Gewindestangen. Die Gewindestangen sind in einem Winkel zueinander und vorzugsweise in einer gemeinsamen Ebene angeordnet und mit dem oben erläuterten Verbinder verbunden. Dabei weist der Verbinder den Riegel mit dem Innengewindeloch auf, der durch die Löcher in den Schenkeln des Bügels des Verbinders gesteckt ist. Die erste der beiden Gewindestangen ist in dem Joch des Bügels des Verbinders angeordnet, so dass das Gewindeeingriffelement im Joch des Bügels in Eingriff mit dem Gewinde der ersten Gewindestange und der Bügel dadurch axial auf der ersten Gewindestange festgelegt ist. Insbesondere hält der durch die Löcher in den Schenkeln des Bügels des Verbinders gesteckte Riegel die erste Gewindestange in dem Joch des Bügels und das Gewindeeingriffelement in Eingriff mit dem Gewinde der ersten Gewindestange. Die zweite Gewindestange ist in das Innengewindeloch des Riegels geschraubt und dadurch mit dem Verbinder und über den Verbinder mit der ersten Gewindestange verbunden.

Zum Verbinden der beiden Gewindestangen sieht der Anspruch 10 vor, den Bügel des Verbinders so auf die erste Gewindestange aufzusetzen, dass sich die erste Gewindestange in dem Joch des Bügels des Verbinders, und das Gewindeeingriffelement im Joch des Bügels in Eingriff mit dem Gewinde der ersten Gewindestange befindet. Der Bügel kann axial auf die erste Gewindestange beziehungsweise umgekehrt die erste Gewindestange axial in den Bügel geschoben werden. In diesem Fall kann der Riegel bereits durch die Löcher in den Schenkeln des Bügels gesteckt sein. Der Bügel kann auch seitlich zur ersten Gewindestange an einer von dem Joch entfernten Stelle seiner beiden Schenkel auf die erste Gewindestange aufgesetzt werden. In diesem Fall kann der Riegel erst durch die Löcher in den beiden Schenkeln gesteckt werden, wenn sich die erste Gewindestange in dem Joch des Bügels befindet. Die zweite Gewindestange wird in das Innengewindeloch des Riegels geschraubt, wofür der Riegel insbesondere so in den Löchern der beiden Schenkel des Bügels gedreht wird, dass sein Innengewindeloch axial zur zweiten Gewindestange ausgerichtet ist. Die Erfindung legt nicht fest, dass die zweite Gewindestange erst in das Innengewindeloch des Riegels geschraubt wird, nachdem die erste Gewindestange im Joch des Bügels des Verbinders angeordnet worden ist.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines in der Zeichnung dargestellten Ausführungsbeispiels näher erläutert. Es zeigen:
- Figur 1: einen Verbinder gemäß der Erfindung mit durchsichtig gezeichnetem Bügel in perspektivischer Darstellung;
- Figur 2: den Verbinder aus Figur 1 mit weggeschnittenem vorderem Schenkel;
- Figur 3: eine erfindungsgemäße Befestigungsanordnung in perspektivischer Explosionsdarstellung; und
- Figur 4: die Befestigungsanordnung aus Figur 3 in zusammengebautem Zustand.

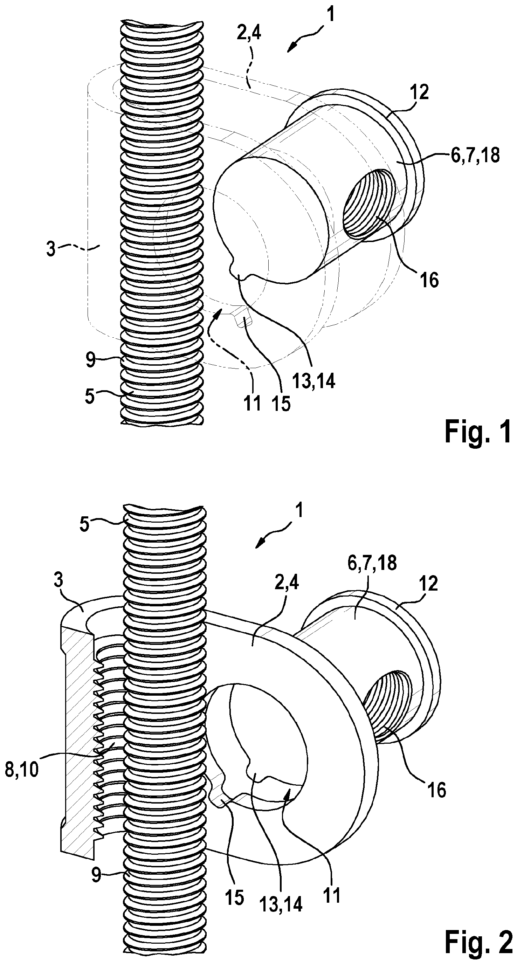

Der in den Figuren 1 und 2 dargestellte, erfindungsgemäße Verbinder 1 weist einen Bügel 2 mit einem U-förmigen Profil auf. Der Bügel 2 ist aus einem Blechstreifen gebogen und weist ein halbzylinderschalenförmiges Joch 3 auf, von dem zwei Schenkel 4 tangential abstehen. Die Schenkel 4 sind eben und parallel zueinander, das heißt, sie weisen einen Abstand voneinander auf, der einem Durchmesser des halbzylinderschalenförmigen Jochs 3 entspricht. In Figur 1 ist der Bügel 2 durchsichtig gezeichnet, damit eine koaxial in dem Joch 3 anordenbare beziehungsweise angeordnete erste Gewindestange 5 und ein Riegel 6 in Form eines Zylinderbolzens 7 sichtbar sind. In Figur 2 ist ein einem Betrachter zugewandter Schenkel der beiden Schenkel 4 weggeschnitten, das heißt nicht gezeichnet, damit ein Halbinnengewinde 8 im Joch 3 und die erste Gewindestange 5 sichtbar sind.

An seinem Innenumfang weist das halbzylinderschalenförmige Joch 3 das Halbinnengewinde 8 auf, das sich wie das Joch 3 über 180° auf einer Innenseite des Joch 3 in einer Umfangsrichtung erstreckt. Das Halbinnengewinde 8 kann sich auch über weniger als 180° in der Umfangsrichtung erstrecken und deswegen allgemein auch als Teilinnengewinde aufgefasst werden. Das Halbinnengewinde 8 bildet ein Gegengewinde für ein Gewinde 9 der ersten Gewindestange 5, mit dem das Halbinnengewinde 8 in Eingriff steht, wenn die erste Gewindestange 5 koaxial zum Joch 3 in dem Joch 3 des Bügels 2 des erfindungsgemäßen Verbinders 1 angeordnet ist. In Figur 2 ist die erste Gewindestange 5 radial zum Joch 3 versetzt gezeichnet, wodurch das Halbinnengewinde 8 nicht in Eingriff mit dem Gewinde 9 der ersten Gewindestange 5, dafür aber das Halbinnengewinde 8 sichtbar ist. Das Halbinnengewinde 8 bildet ein Gewindeeingriffelement 10, das den Bügel 2 durch den Eingriff in das Gewinde 9 der ersten Gewindestange 5 axial auf der ersten Gewindestange 5 festlegt, wenn die erste Gewindestange 5 koaxial in dem Joch 3 des Bügels 2 angeordnet ist, wie in Figur 1 dargestellt.

Die beiden Schenkel 4 des Bügels 2 weisen miteinander fluchtende, kreisförmige Löcher 11 auf, durch die der den Riegel 6 bildende Zylinderbolzen 7 steckbar ist. Die beiden Löcher 11 sind so in den Schenkeln 4 des Bügels 2 angeordnet, dass der Riegel 6 die erste Gewindestange 5 koaxial in dem Joch 3 des Bügels 2 hält, wenn der Riegel 6 durch die Löcher 11 in den beiden Schenkeln 4 des Bügels 2 gesteckt ist. Dadurch hält der Riegel 6 auch das Halbinnengewinde 8, welches das Gewindeeingriffelement 10 im Joch 3 des Bügels 2 bildet, in Eingriff mit dem Gewinde 9 der ersten Gewindestange 5, wenn der Riegel 6 durch die Löcher 11 in den Schenkeln 4 des Bügels 2 gesteckt ist, wodurch der Bügel 2 des erfindungsgemäßen Verbinders 1 axial auf der ersten Gewindestange 5 festgelegt ist.

Der den Riegel 6 bildende Zylinderbolzen 7 weist einen flanschartigen, umlaufenden und radial überstehenden Kopf 12 an einem Ende auf, der auf einer Außenseite eines der beiden Schenkel 4 des Bügels 2 anliegt, wenn der Riegel 6 durch die Löcher 11 in den Schenkeln 4 des Bügels 2 gesteckt ist, so dass eine Ein- beziehungsweise Durchstecktiefe des Riegels 6 durch die Löcher 11 in den Schenkeln 4 des Bügels 2 begrenzt ist. Die Außenseiten der Schenkel 4 sind einander abgewandt und Innenseiten der Schenkel 4 einander zugewandt.

An einem seinem Kopf 12 fernen Ende weist der den Riegel 6 bildende Zylinderbolzen 7 eine radial abstehende Nase an seinem Umfang auf, die auch als Vorsprung 13 aufgefasst werden kann und die eine Ausziehsicherung 14 des Riegels 6 bildet. Die Ausziehsicherung 14 befindet sich auf einer Außenseite des anderen Schenkels 4, wenn der Riegel 6 so weit durch die Löcher 11 in den Schenkeln 4 des Bügels 2 gesteckt ist, dass sein Kopf 12 an der Außenseite des einen Schenkels 4 anliegt. Ränder der Löcher 11 in den Schenkeln 4 des Bügels 2 weisen Aussparungen 15 an einer Umfangsstelle auf, die so groß und so geformt sind, dass der die Ausziehsicherung 14 bildende Vorsprung 13 durchtreten kann.

Wie in Figur 1 zu sehen ist, sind die Aussparungen 15 in den Rändern der Löcher 11 in den beiden Schenkeln 4 des Bügels 2 in einer Umfangsrichtung versetzt zueinander, so dass der Riegel 6 beim Durchstecken durch die Löcher 11 in den Schenkeln 4 des Bügels 2 gedreht werden muss, wenn der die Ausziehsicherung 14 bildende Vorsprung 13 durch die Aussparung 15 im Rand des Lochs 11 in dem einen Schenkel 4 durchgetreten ist, damit er mit der Aussparung 15 im Rand des Lochs 11 in dem anderen Schenkel 4 fluchtet und auch durch diese Aussparung 15 durchtreten kann. Dadurch kann der Riegel 6 nicht aus den Löchern 11 in beiden Schenkeln 4, das heißt vollständig aus dem Bügel 2 des erfindungsgemäßen Verbinders 1, herausgezogen werden, ohne den Riegel 6 zwischendurch zu drehen, wodurch eine Verliersicherung für den Riegel 6 gebildet ist. Nachdem der Riegel 6 bis zur Anlage seines Kopfes 12 an der Außenseite des einen Schenkels 4 durch die Löcher 11 in beiden Schenkeln 4 des Bügels 2 durchgesteckt worden ist, und sich der die Ausziehsicherung 14 bildende Vorsprung 13 auf der Außenseite des anderen Schenkels 4 befindet, wird der Riegel 6 in den Löchern 11 gedreht, so dass der Vorsprung 13 in Umfangsrichtung versetzt zu der Aussparung 15 im Rand des Lochs 11 im anderen Schenkel 4 ist und der Riegel 6 nicht herausgezogen werden kann.

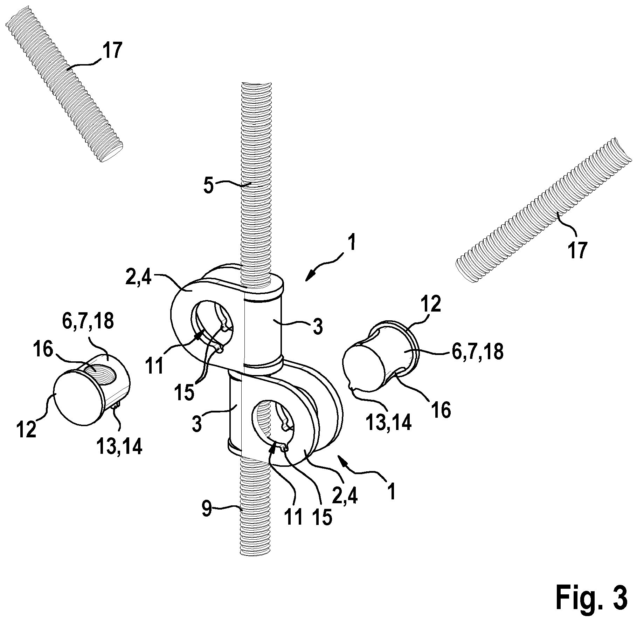

Der den Riegel 6 bildende Zylinderbolzen 7 weist ein ihn radial durchsetzendes Innengewindeloch 16 auf, das sich in einer Mitte zwischen den beiden Schenkeln 4 des Bügels 2 befindet, wenn der Riegel 6 bis zur Anlage seines Kopfes 12 an der Außenseite des einen Schenkels 4 durch die Löcher 11 in den beiden Schenkeln 4 gesteckt ist. Zu einer Verbindung der ersten Gewindestange 5 mit einer zweiten Gewindestange 17, die schräg zur ersten Gewindestange 5 und in einer Axialebene zur ersten Gewindestange 5 angeordnet ist, wird - wie in Figur 3 zu sehen - der Bügel 2 auf der ersten Gewindestange 5 so gedreht, dass sich die zweite Gewindestange 17 in einer Mittelebene zwischen den beiden Schenkeln 4 des Bügels 2 befindet, und wird der Riegel 6 in den Löchern 11 der Schenkel 4 des Bügels 2 so gedreht, dass das Innengewindeloch 16 axial zu der zweiten Gewindestange 17 ausgerichtet ist. Die zweite Gewindestange 17, deren Längsachse in einem Winkel zur Längsachse der ersten Gewindestange 5 und in einer gemeinsamen Ebene mit dieser angeordnet ist, kann nun in das Innengewindeloch 16 des Riegels 6 geschraubt werden, wodurch die zweite Gewindestange 17 mit dem erfindungsgemäßen Verbinder 1 und beide Gewindestangen 5, 17 über den erfindungsgemäßen Verbinder 1 miteinander verbunden sind.

Der Riegel 6 mit dem Innengewindeloch 16 zum Einschrauben der zweiten Gewindestange 17 kann allgemein auch als Befestigungseinrichtung 18 zu einem Verbinden der zweiten Gewindestange 17 mit dem Verbinder 1 und mit der ersten Gewindestange 5 aufgefasst werden.

Die in das Innengewindeloch 16 des Riegels 6 geschraubte zweite Gewindestange 17 hält den Riegel 6 drehfest, so dass er nicht aus den Löchern 11 in den Schenkeln 4 des Bügels 2 herausgezogen werden kann.

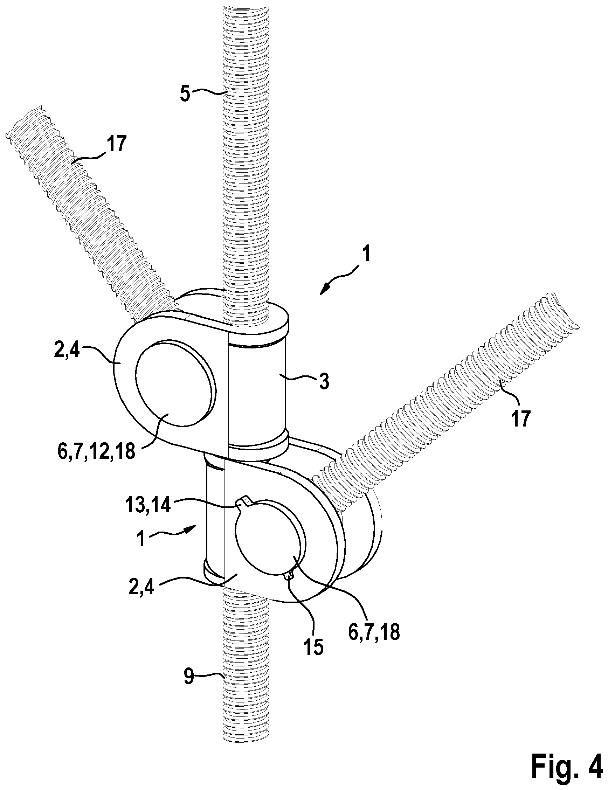

Es können mehrere zweite Gewindestangen 17 mit jeweils einem eigenen erfindungsgemäßen Verbinder 1 an axial zueinander an der ersten Gewindestange 5 versetzten Stellen mit der ersten Gewindestange 5 verbunden werden. Die zweiten Gewindestangen 17 können in grundsätzlich beliebigen Winkeln und in grundsätzlich beliebigen Axialebenen der ersten Gewindestange 5 zur ersten Gewindestange 5 angeordnet sein. Figur 4 zeigt zwei zweite Gewindestangen 17, die einander gegenüber in einer gemeinsamen Axialebene in ungefähr gleichen Winkeln zu der ersten Gewindestange 5 mit der ersten Gewindestange 5 verbunden sind. Die erste Gewindestange 5 und mindestens eine zweite Gewindestange 17, die mit dem/einem erfindungsgemäßen Verbinder 1 verbunden sind, bilden eine erfindungsgemäße Verbindungsanordnung.

### Bezugszeichenliste

- 1: Verbinder
- 2: Bügel
- 3: Joch
- 4: Schenkel
- 5: erste Gewindestange
- 6: Riegel
- 7: Zylinderbolzen
- 8: Halbinnengewinde
- 9: Gewinde der ersten Gewindestange 5
- 10: Gewindeeingriffelement
- 11: Loch
- 12: Kopf
- 13: Vorsprung
- 14: Ausziehsicherung
- 15: Aussparung
- 16: Innengewindeloch
- 17: zweite Gewindestange
- 18: Befestigungseinrichtung

## Patentansprüche

1. Verbinder mit einem insbesondere U-förmigen Bügel (2), zum Verbinden einer ersten Gewindestange (5) mit einer zweiten Gewindestange (17) in einem verstellbaren Winkel, mit zwei Schenkeln (4), die durch ein Joch (3) verbunden sind, in dem die erste Gewindestange (5) anordenbar ist, so dass das Joch (3) des Verbinders (1) die erste Gewindestange (5) auf einem Teil ihres Umfangs umgreift, und mit einer Befestigungseinrichtung (18) für die zweite Gewindestange (17), mit der die zweite Gewindestange (17) in einem verstellbaren Winkel zu der in dem Joch (3) des Bügels (2) angeordneten ersten Gewindestange (5) verbindbar ist, wobei sich der Winkel auf die Längsachsen der Gewindestangen (5, 17) bezieht, **dadurch gekennzeichnet, dass** der Verbinder (1) ein Gewindeeingriffelement (10) in seinem Joch (3) aufweist, das zwischen zwei benachbarte Gewindegänge der in dem Joch (3) angeordneten ersten Gewindestange (5) greift, derart, dass der Bügel (2) des Verbinders (1) durch den Gewindeeingriff axial zur ersten Gewindestange (5) auf der in dem Joch (3) des Verbinders (1) angeordneten ersten Gewindestange (5) festgelegt ist.

2. Verbinder nach Anspruch 1, **dadurch gekennzeichnet, dass** der Verbinder (1) ein Teilinnengewinde (8) in seinem Joch (3) aufweist, dessen Gewindegänge Gewindeeingriffelemente (10) für den Gewindeeingriff in ein Gewinde (9) der in dem Joch (3) des Verbinders (1) angeordneten ersten Gewindestange (5) bilden.

3. Verbinder nach Anspruch 1 oder 2, **dadurch gekennzeichnet, dass** der Bügel (2) des Verbinders (1) ein halbzylinderschalenförmiges Joch (3) mit einem Halbinnengewinde (8) als Gewindeeingriffelement (10) und zwei tangential an das Joch (3) anschließende und zueinander parallele, plattenförmige Schenkel (4) aufweist.

4. Verbinder nach einem oder mehreren der Ansprüche 1 bis 3, **dadurch gekennzeichnet, dass** der Bügel (2) des Verbinders (1) zwei miteinander fluchtende Löcher (11) in seinen Schenkeln (4) aufweist, in die ein Riegel (6) des Verbinders (1) steckbar ist, der die in dem Joch (3) des Verbinders (1) angeordnete Gewindestange (5) in dem Gewindeeingriff mit dem Gewindeeingriffelement (10) im Joch (3) des Verbinders (1) hält.

5. Verbinder nach Anspruch 4, **dadurch gekennzeichnet, dass** der Riegel (6) ein Innengewindeloch (16) zum Einschrauben der zweiten Gewindestange (17) aufweist.

6. Verbinder nach Anspruch 4 oder 5, **dadurch gekennzeichnet, dass** der Riegel (6) zu einer Winkelausrichtung seines Innengewindelochs (16) in den Löchern (11) in den Schenkeln (4) des Bügels (2) des Verbinders (1) drehbar ist.

7. Verbinder nach Anspruch 6, **dadurch gekennzeichnet, dass** der Riegel (6) einen Vorsprung (13) als Ausziehsicherung (14) an seinem Umfang aufweist, der einen der beiden Schenkel (4) des Verbinders (1) so hintergreift, dass der Riegel (6) nicht aus den beiden fluchtenden Löchern (11) in den beiden Schenkeln (4) des Bügels (2) des Verbinders (1) herausgezogen werden kann, wenn der Riegel (6) in die beiden Löcher (11) gesteckt und so gedreht ist, dass die Ausziehsicherung (14) in Umfangsrichtung des Riegels (6) und der Löcher (11) versetzt zu einer Aussparung (15) in dem Rand des Lochs (11) in mindestens einem der beiden Schenkel (4) des Bügels (2) des Verbinders (1) ist, die zum Durchstecken der Ausziehsicherung (14) vorgesehen ist.

8. Verbinder nach Anspruch 7, **dadurch gekennzeichnet, dass** beide Löcher (11) in den Schenkeln (4) des Verbinders (1) Aussparungen (15) zum Durchstecken der Ausziehsicherung (14) des Riegels (6) in ihren Rändern aufweisen, und dass die Aussparungen (15) in den Rändern der beiden Löcher (11) in beiden Schenkeln (4) des Bügels (2) in der Umfangsrichtung der Löcher (11) zueinander versetzt sind.

9. Verbindungsanordnung mit zwei Gewindestangen (5, 17), die in einem Winkel zueinander angeordnet und mit einem Verbinder (1) nach einem oder mehreren der Ansprüche 4 bis 8 verbunden sind, **dadurch gekennzeichnet, dass** die erste Gewindestange (5) so in dem Joch (3) des Bügels (2) des Verbinders (1) angeordnet ist, dass ihr Gewinde (9) in Eingriff mit dem Gewindeeingriffelement (10) im Joch (3) des Bügels (2) des Verbinders (1) ist und dass die zweite Gewindestange (17) in das Innengewindeloch (16) des Riegels (6) geschraubt ist, der durch die Löcher (11) in den Schenkeln (4) des Bügels (2) des Verbinders (1) gesteckt ist.

10. Verfahren zum Verbinden von zwei Gewindestangen (5, 17) mit einem Verbinder (1) nach einem oder mehreren der Ansprüche 4 bis 8, **dadurch gekennzeichnet, dass** der Bügel (2) des Verbinders (1) so auf die erste Gewindestange (5) aufgesetzt wird, dass sich die erste Gewindestange (5) in dem Joch (3) des Bügels (2) des Verbinders (1) befindet und das Gewindeeingriffelement (10) im Joch (3) des Bügels (2) in Eingriff mit dem Gewinde (9) der ersten Gewindestange (5) ist, dass der Riegel (6) durch die Löcher (11) in den Schenkeln (4) des Verbinders (1) gesteckt wird, der das Joch (3) des Verbinders (1) auf der ersten Gewindestange (5) und das Gewindeeingriffelement (10) im Joch (3) des Verbinders (1) in Eingriff mit dem Gewinde (9) der ersten Gewindestange (5) hält, und dass die zweite Gewindestange (17) in das Innengewindeloch (16) des Riegels (6) geschraubt wird.

## Claims

1. Connector having especially a U-shaped bracket (2), for connection of a first threaded rod (5) to a second threaded rod (17) at an adjustable angle, having two limbs (4) which are connected by a yoke (3) in which the first threaded rod (5) can be arranged, so that the yoke (3) of the connector (1) engages around the first threaded rod (5) over part of its circumference, and having a fixing device (18) for the second threaded rod (17) with which the second threaded rod (17) is connectible at an adjustable angle with respect to the first threaded rod (5) arranged in the yoke (3) of the bracket (2), wherein the angle refers to the longitudinal axes of the threaded rods (5, 17), **characterised in that** the connector (1) has in its yoke (3) a thread engagement element (10) which engages between two adjacent thread turns of the first threaded rod (5) arranged in the yoke (3) in such a way that, as a result of the threaded engagement, the bracket (2) of the connector (1) is fixed in place on the first threaded rod (5) arranged in the yoke (3) of the connector (1) axially with respect to the first threaded rod (5).

2. Connector according to claim 1, **characterised in that** the connector (1) has in its yoke (3) a partial internal thread (8), the thread turns of which form thread engagement elements (10) for threaded engagement in a thread (9) of the first threaded rod (5) arranged in the yoke (3) of the connector (1).

3. Connector according to claim 1 or 2, **characterised in that** the bracket (2) of the connector (1) has a semicylindrical-shell-shaped yoke (3) with an internal half-thread (8) as thread engagement element (10), and two plate-like limbs (4) which tangentially adjoin the yoke (3) and are parallel to one another.

4. Connector according to one or more of claims 1 to 3, **characterised in that** the bracket (2) of the connector (1) has in its limbs (4) two mutually aligned holes (11) into which a locking member (6) of the connector (1) can be inserted, which locking member holds the threaded rod (5) arranged in the yoke (3) of the connector (1) in threaded engagement with the thread engagement element (10) in the yoke (3) of the connector (1).

5. Connector according to claim 4, **characterised in that** the locking member (6) has an internally threaded hole (16) for screwing in the second threaded rod (17).

6. Connector according to claim 4 or 5, **characterised in that** the locking member (6), for angular alignment of its internally threaded hole (16), is rotatable in the holes (11) in the limbs (4) of the bracket (2) of the connector (1).

7. Connector according to claim 6, **characterised in that** the locking member (6) has on its circumference a projection (13) as pull-out prevention device (14), which projection engages behind one of the two limbs (4) of the connector (1) so that the locking member (6) cannot be pulled out of the two aligned holes (11) in the two limbs (4) of the bracket (2) of the connector (1) once the locking member (6) has been inserted into the two holes (11) and rotated so that the pull-out prevention device (14) is offset in the circumferential direction of the locking member (6) and of the holes (11) with respect to a notch (15) in the edge of the hole (11) in at least one of the two limbs (4) of the bracket (2) of the connector (1), which notch is provided for passage of the pull-out prevention device (14).

8. Connector according to claim 7, **characterised in that** both holes (11) in the limbs (4) of the connector (1) have in their edges notches (15) for passage of the pull-out prevention device (14) of the locking member (6); and the notches (15) in the edges of the two holes (11) in both limbs (4) of the bracket (2) are offset with respect to one another in the circumferential direction of the holes (11).

9. Connecting arrangement having two threaded rods (5, 17) which are arranged at an angle with respect to one another and are connected with a connector (1) according to one or more of claims 4 to 8, **characterised in that** the first threaded rod (5) is arranged in the yoke (3) of the bracket (2) of the connector (1) so that its thread (9) is in engagement with the thread engagement element (10) in the yoke (3) of the bracket (2) of the connector (1); and the second threaded rod (17) is screwed into the internally threaded hole (16) of the locking member (6), which has been inserted through the holes (11) in the limbs (4) of the bracket (2) of the connector (1).

10. Method for connecting two threaded rods (5, 17) with a connector (1) according to one or more of claims 4 to 8, **characterised in that** the bracket (2) of the connector (1) is mounted on the first threaded rod (5) so that the first threaded rod (5) is located in the yoke (3) of the bracket (2) of the connector (1) and the thread engagement element (10) in the yoke (3) of the bracket (2) is in engagement with the thread (9) of the first threaded rod (5); the locking member (6) is inserted through the holes (11) in the limbs (4) of the connector (1), which locking member holds the yoke (3) of the connector (1) on the first threaded rod (5) and the thread engagement element (10) in the yoke (3) of the connector (1) in engagement with the thread (9) of the first threaded rod (5); and the second threaded rod (17) is screwed into the internally threaded hole (16) of the locking member (6).

## Revendications

1. Pièce d'assemblage comprenant un étrier (2) notamment configuré en U, conçu pour relier une première tige filetée (5) à une seconde tige filetée (17) selon un angle réglable, et muni de deux ailes (4) reliées par un entretoisement (3) dans lequel la première tige filetée (5) peut être logée de façon telle que ledit entretoisement (3) de la pièce d'assemblage (1) ceinture ladite première tige filetée (5) sur une partie de son pourtour ; et un dispositif de fixation (18) dévolu à la seconde tige filetée (17), par lequel ladite seconde tige filetée (17) peut être reliée selon un angle réglable vis-à-vis de ladite première tige filetée (5) logée dans l'entretoisement (3) de l'étrier (2), ledit angle se rapportant aux axes longitudinaux des tiges filetées (5, 17), **caractérisée par le fait que** la pièce d'assemblage (1) est dotée, dans son entretoisement (3), d'un élément (10) de venue en prise par filetage qui s'engage entre deux filets contigus de la première tige filetée (5) logée dans ledit entretoisement (3), de telle sorte que, sous l'effet de la venue en prise par filetage, l'étrier (2) de la pièce d'assemblage (1) soit bloqué à demeure sur la première tige filetée (5) logée dans ledit entretoisement (3) de ladite pièce d'assemblage (1), dans le sens axial par rapport à ladite première tige filetée (5).

2. Pièce d'assemblage selon la revendication 1, **caractérisée par le fait que** ladite pièce d'assemblage (1) est pourvue, dans son entretoisement (3), d'un filetage intérieur partiel (8) dont les filets forment des éléments (10) de venue en prise par filetage affectés à la venue en prise, par filetage, dans un filetage (9) de la première tige filetée (5) logée dans ledit entretoisement (3) de ladite pièce d'assemblage (1).

3. Pièce d'assemblage selon la revendication 1 ou 2, **caractérisée par le fait que** l'étrier (2) de ladite pièce d'assemblage (1) comprend un entretoisement (3) en forme de coquille semi-cylindrique, pourvu d'un demi-filetage intérieur (8) en tant qu'élément(10) de venue en prise par filetage, et deux ailes (4) en forme de plaques, parallèles l'une à l'autre et se rattachant tangentiellement audit entretoisement (3).

4. Pièce d'assemblage selon l'une ou plusieurs des revendications 1 à 3, **caractérisée par le fait que** l'étrier (2) de ladite pièce d'assemblage (1) comporte, dans ses ailes (4), deux trous (11) mutuellement alignés dans lesquels peut être enfiché un verrou (6) de la pièce d'assemblage (1) qui maintient la tige filetée (5), logée dans l'entretoisement (3) de ladite pièce d'assemblage (1), en prise par filetage avec l'élément (10) de venue en prise par filetage situé dans ledit entretoisement (3).

5. Pièce d'assemblage selon la revendication 4, **caractérisée par le fait que** le verrou (6) est percé d'un trou taraudé (16) dédié au vissage de la seconde tige filetée (17).

6. Pièce d'assemblage selon la revendication 4 ou 5, **caractérisée par le fait que** le verrou (6) peut tourner, en vue d'une orientation angulaire de son trou taraudé (16), dans les trous (11) pratiqués dans les ailes (4) de l'étrier (2) de ladite pièce d'assemblage (1).

7. Pièce d'assemblage selon la revendication 6, **caractérisée par le fait que** le verrou (6) est muni, sur son pourtour, d'une protubérance (13) qui constitue un arrêt antidéboîtement (14) et qui emprisonne, par-derrière, l'une des deux ailes (4) de ladite pièce d'assemblage (1), de façon telle que ledit verrou (6) ne puisse pas être déboîté hors des deux trous alignés (11), pratiqués dans les deux ailes (4) de l'étrier (2) de ladite pièce d'assemblage (1), lorsque ledit verrou (6) est enfiché dans les deux trous (11) et est animé d'une rotation telle que ledit arrêt antidéboîtement (14) soit décalé, dans la direction périphérique dudit verrou (6) et desdits trous (11), par rapport à une échancrure (15) qui est façonnée dans le bord du trou (11), dans au moins l'une des deux ailes (4) dudit étrier (2) de ladite pièce d'assemblage (1), et est prévue pour l'enfichage dudit arrêt antidéboîtement (14).

8. Pièce d'assemblage selon la revendication 7, **caractérisée par le fait que** les deux trous (11) pratiqués dans les ailes (4) de ladite pièce d'assemblage (1) comportent, dans leurs bords, des échancrures (15) destinées à l'enfichage de l'arrêt antidéboîtement (14) du verrou (6) ; et **par le fait que** les échancrures (15), façonnées dans les bords des deux trous (11) pratiqués dans les deux ailes (4) de l'étrier (2), sont mutuellement décalées dans la direction périphérique desdits trous (11).

9. Agencement assemblé comprenant deux tiges filetées (5, 17) disposées selon un angle, l'une par rapport à l'autre, et reliées à l'aide d'une pièce d'assemblage (1) conforme à l'une ou plusieurs des revendications 4 à 8, **caractérisé par le fait que** la première tige filetée (5) est logée, dans l'entretoisement (3) de l'étrier (2) de la pièce d'assemblage (1), de telle manière que son filetage (9) soit en prise avec l'élément (10) de venue en prise par filetage situé dans ledit entretoisement (3) dudit étrier (2) de ladite pièce d'assemblage (1) ; et **par le fait que** la seconde tige filetée (17) est vissée dans le trou taraudé (16) du verrou (6) enfiché à travers les trous (11) pratiqués dans les ailes (4) dudit étrier (2) de ladite pièce d'assemblage (1).

10. Procédé d'assemblage dévolu à la liaison de deux tiges filetées (5, 17) à l'aide d'une pièce d'assemblage (1) conforme à l'une ou plusieurs des revendications 4 à 8, **caractérisé par le fait que** l'étrier (2) de la pièce d'assemblage (1) est mis en place, sur la première tige filetée (5), de telle manière que ladite première tige filetée (5) se trouve dans l'entretoisement (3) dudit étrier (2) de ladite pièce d'assemblage (1) et que l'élément (10) de venue en prise par filetage, situé dans ledit entretoisement (3) dudit étrier (2), soit en prise avec le filetage (9) de ladite première tige filetée (5) ; **par le fait que** le verrou (6), enfiché à travers les trous (11) pratiqués dans les ailes (4) de ladite pièce d'assemblage (1), maintient ledit entretoisement (3) de la pièce d'assemblage (1) sur la première tige filetée (5) et maintient l'élément (10) de venue en prise par filetage, situé dans ledit entretoisement (3) de ladite pièce d'assemblage (1), en prise avec ledit filetage (9) de ladite première tige filetée (5) ; et **par le fait que** la seconde tige filetée (17) est vissée dans le trou taraudé (16) dudit verrou (6).
